# EUROPÄISCHE PATENTANMELDUNG

(11) **EP 4 155 943 A1**
(43) Veröffentlichungstag der Anmeldung: **29.03.2023**
(21) Anmeldenummer: 22163418.1
(22) Anmeldetag: 22.03.2022
(51) Int. Cl.: G06F 11/36

(54) **COMPUTERIMPLEMENTIERTES VERFAHREN ZUM AUTOMATISIERTEN TESTEN UND FREIGEBEN VON FUNKTIONEN EINES FAHRZEUGS**

(30) Priorität: 23.09.2021 DE 102021124634
(71) Anmelder: dSPACE GmbH, 33102 Paderborn (DE)
(72) Erfinder: Stavesand, Jann-Eve, 33102 Paderborn (DE); Timmermann, Robert, 33102 Paderborn (DE); Hammer, Jan Hendrik, 33102 Paderborn (DE)

(57) **Zusammenfassung**

Offenbart wird ein computerimplementiertes Verfahren zum automatisierten Testen von Funktionen, insbesondere Sicherheitsfunktionen, eingebundenen in einen Ende-zu-Ende Prozess von der Datenerhebung im Fahrzeug bis zur Aktualisierung der Fahrfunktion in das Fahrzeug zurück und / oder virtuelle Homologation von zu testenden zumindest teilweise autonomen Fahrfunktionen.

## Beschreibung

Die vorliegende Erfindung betrifft ein computerimplementiertes Verfahren zum automatisierten Testen und Freigeben von Funktionen, insbesondere Sicherheitsfunktionen, eingebundenen in einen Ende-zu-Ende Prozess von der Datenerhebung im Fahrzeug bis zur Aktualisierung der Fahrfunktion in das Fahrzeug zurück und / oder virtuelle Homologation von zu testenden zumindest teilweise autonomen Fahrfunktionen.

Des Weiteren betrifft die vorliegende Erfindung eine Testeinheit zum automatisierten Testen und Freigeben von Funktionen, insbesondere Sicherheitsfunktionen, eines Fahrzeugs und/oder virtuellen Homologation von zu testenden zumindest teilweise autonomen Fahrfunktionen und ein Computerprogramm und einen computerlesbaren Datenträger.

### Stand der Technik

Aktuell werden Fahrzeuge als Einheit aus Hard- und Softwarekomponenten geprüft und genehmigt. Fahrassistenzsysteme wie z.B. ein adaptiver Geschwindigkeitsregler und/oder Funktionen für das hochautomatisierte bzw. autonome Fahren können mithilfe diverser Überprüfungsmethoden verifiziert bzw. validiert werden. Dabei können insbesondere Hardware-in-the-Loop (HIL) Verfahren, Model-in-the-Loop (MIL) Verfahren, Software-in-the-Loop (SIL) Verfahren, Simulationen und/oder Testfahrten verwendet werden. Dabei sind XIL (X-in-the-Loop) Verfahren wünschenswert, wobei das X ein Modell, eine Software oder eine Hardware einer Steuerung und Regelung im Test bezeichnet. XIL strebt den nahtlosen Übergang zwischen MIL-, SIL-, HIL- und physischen Umgebungen durch die Wiederverwendung von Modellen, Tests, Daten und Werkzeugen an.

Eine nachträgliche Veränderung der Fahrzeugsoftware, also einer Fahrfunktion erfordert eine Bewertung der Homologationsrelevanz und im Falle einer solcher einen Genehmigungsnachtrag. Gleichzeitig ergeben sich Sicherheitsbedenken bezüglich der Veränderung sicherheitsrelevanter Fahrzeugkomponenten / Fahrfunktionen durch die nachträgliche Veränderung. Infolgedessen werden solche Änderungen für sicherheitskritische Komponenten typischerweise nur im Rahmen von Rückrufaktionen und Werkstattbesuchen bereitgestellt. Davon abgesehen fließen Entwicklungsfortschritte lediglich in neue Fahrzeuggenerationen ein, die ihrerseits wiederum für im Durchschnitt 10 Jahre auf dem Markt bleiben. Durch die bereits vorliegenden Daten aus den Fahrzeugen in realen Fahrbetrieb liegt ein großes Potenzial vor, diese Daten für die weitere Optimierung und Homologation und insbesondere einer virtuellen Homologation zu verwenden.

Der Aufwand, insbesondere der Zeit- und/oder Kostenaufwand, zum Testen derartiger Fahrzeugfunktionen unter Verwendung der oben genannten Überprüfungsmethoden ist dabei typischerweise sehr hoch, da eine große Anzahl potenziell möglicher Fahrsituationen getestet werden muss.

Ein zumindest teilweise autonomes Verkehrsmittel/Fahrzeug nachträglich zur Optimierung ausschließlich auf der Straße mit Fahrtstrecken über Milliarden Kilometer zu testen ist aus Zeit- und Kostengründen nicht möglich. Zudem würden viele redundante Testkilometer entstehen, während kritische und ungewöhnliche Situationen, die aber relevant für die Fähigkeiten des zumindest teilweise autonomen Fahrzeugs sind, nicht auftreten.

Dies kann insbesondere zu einem hohen Aufwand für Testfahrten als auch für Simulationen führen. DE 10 2017 200 180 A1 gibt ein Verfahren zur Verifizierung und/oder Validierung einer Fahrzeugfunktion an, welche dafür vorgesehen ist, ein Fahrzeug in Längs- und/oder Querrichtung autonom zu führen.

Das Verfahren umfasst ein Ermitteln, auf Basis von Umfelddaten bezüglich eines Umfelds des Fahrzeugs, einer Test-Steueranweisung der Fahrzeugfunktion an einen Aktuator des Fahrzeugs, wobei die Test-Steueranweisung nicht durch den Aktuator umgesetzt wird.

Das Verfahren umfasst des Weiteren ein Simulieren, auf Basis von Umfelddaten und unter Verwendung eines Verkehrsteilnehmer-Modells bezüglich zumindest eines Verkehrsteilnehmers im Umfeld des Fahrzeugs, einer fiktiven Verkehrssituation, die vorliegen würde, wenn die Test-Steueranweisung umgesetzt worden wäre.

Das Verfahren umfasst ferner ein Bereitstellen von Testdaten in Bezug auf die fiktive Verkehrssituation. Die Fahrzeugfunktion wird hierbei zum Ermitteln der Test-Steueranweisung passiv im Fahrzeug betrieben.

Nachteilhaft an diesem Verfahren ist, dass zur Verifizierung und/oder Validierung der Fahrzeugfunktion ein tatsächlicher Betrieb des Fahrzeugs zum Ermitteln der benötigten Daten erforderlich ist und eine Freigabe der Fahrfunktion nicht Teil des Verfahrens ist.

Die vorliegende Erfindung setzt an, nachdem eine erste Freigabe für ein Fahrzeug erfolgt ist und über den regulären Betrieb des Fahrzeugs erste Fahrzeugdaten gesammelt werden können. Jedoch soll der Prozess der erneuten Freigabe einer geänderten Fahrfunktion effizient und ressourcenschonend erfolgen. Daher nutzt die Erfindung, gesammelte Daten aus dem vorhergehenden Betrieb des Fahrzeugs und definiert eine ausreichende Homologation der optimierten Fahrfunktion durch vollständig virtuelle und/oder teilweise virtuelle und / oder reale Tests.

Durch den starken Wandel und hoher Entwicklungsgeschwindigkeit, impliziert der Verkauf eines ursprünglichen Fahrzeug stärker als je zuvor die gleichzeitige Erbringung kontinuierlicher Serviceleistungen für Betrieb, Wartung und Weiterentwicklung bereits ausgelieferter Fahrzeugsysteme. Durch den wachsenden Funktionsumfang moderner Fahrzeuge und die damit einhergehende Komplexität wird die Anzahl an nachträglichen Änderungen für im Betrieb befindliche Fahrzeuge weiter ansteigen. Diese zunehmende Verzahnung verschiedener Phasen und deren Weiterentwicklung des Produktlebenszyklus stellt eine signifikante Herausforderung für Automobilhersteller dar. Um dieser Herausforderung Herr zu werden, bedarf es innovativer Ansätze für die kontinuierliche Weiterentwicklung hochkomplexer digitaler Systeme.

Es ist absehbar, dass der vielfach praktizierte Ansatz zur Datenerhebung, Fahrfunktionsentwicklung und -auslieferung ein signifikantes Innovationshemmnis darstellt. Dezidierte Testfahrten können aufgrund ihrer begrenzten Kapazitäten und hohen Kosten lediglich einen vergleichsweisen geringen Anteil relevanter Verkehrssituationen abbilden. Infolgedessen stellen sie keine hinreichende Basis für datengetriebene Fahrfunktionsentwicklung dar. Simulationen und synthetisch generierte Datensätze können diese Unzulänglichkeiten ausgleichen, sind jedoch mit einer gewissen Unsicherheit bezüglich Repräsentativität und Originaltreue behaftet. Für eine effektive und effiziente Lösung ist ein Zurückgreifen auf produktive wachsende Fahrzeugflotten unerlässlich. Diese stellen für den Großteil der etablierten Automobilhersteller eine noch nicht hinreichend genutzte Ressource dar, obwohl eine gut strukturierte Nutzung dieser Potentiale mittel- bis langfristig zu klaren Wettbewerbsvorteilen führen muss.

Dazu ist eine intelligente Testerstellung und -nachsteuerung erforderlich, die Fahrdaten aus realen Fahrbetrieben nutzbar macht, in Testverfahren überführt und eine Bewertung von z.B. Simulationsergebnissen und gegebenenfalls eine veränderte Parametrierung der Tests/ Simulation vornimmt.

Es ist daher Aufgabe der Erfindung, ein Verfahren, eine Testeinheit, ein Computerprogramm und einen computerlesbaren Datenträger anzugeben, welches ein automatisierten Testen von Funktionen auf Basis von realen Fahrzeugdaten eine passende Testumgebung und Tests / Simulationen erzeugt. Die hohe Automatisierung dieser Testdurchführung parallel zum Betrieb der Fahrzeugflotte mit (teil-)automatisierten Fahrfunktionen und die kontinuierliche Überprüfung von Sicherheitskriterien dieser Flotte in einer simulierten Umgebung (Digital Twin / digitaler Verhaltenszwilling) ermöglicht hier erstmals die Freigabe und virtuelle Homologation von Fahrfunktionen auf Basis von Simulationsverfahren wie XIL und Reprocessing, einer Wiederaufbereitung bestehender Datensätze. Der digitaler Verhaltenszwilling wird dabei entsprechend der Testaufgabe der Fahrfunktion (Software- oder Elektronikfuntkion) und der nötigen freigaberelevanten Tests (z.B. Testszenrien für die Zulassung gemäß behördlicher und/oder rechtlicher Zulassungskriterien) automatisiert erstellt und parametriert, ebenso die Simulationsumgebung. Gleichzeitig wird die Testdurchführung in verschiedenen XIL und Reprocessing-Umgebungen gestartet und die nötigen Informationen in einem Testdatenmanagement so zur Verfügung gestellt, dass die Freigabe anhand dieser Informationen möglich ist.

### Offenbarung der Erfindung

Die Aufgabe wird erfindungsgemäß gelöst durch ein computerimplementiertes Verfahren zum automatisierten Testen und Freigeben von Funktionen, insbesondere Sicherheitsfunktionen, eingebundenen in einen Ende-zu-Ende Prozess von der Datenerhebung im Fahrzeug bis zur Aktualisierung der Fahrfunktion in das Fahrzeug zurück und / oder virtuelle Homologation von zu testenden zumindest teilweise autonomen Fahrfunktionen nach Patentanspruch 1, eine Testeinheit nach Patentanspruch 11, ein Computerprogramm nach Patentanspruch 12 und einen computerlesbaren Datenträger nach Patentanspruch 13.

Ein autonomes und / oder teilautonomes Fahrzeug enthält eine Vielzahl von Steuergeräten. Jedes einzelne Steuergerät und deren Verbund müssen bei der Entwicklung und zur Homologation ausgiebig auf ihre fehlerfreie Funktionsweise in jeder, insbesondere in kritischen Verkehrssituation getestet werden.

Da moderne Verkehrsumgebungen jedoch nicht nur hoch komplex und dynamisch, sondern auch volatil sind (z.B. durch neue Verkehrsmodalitäten, Veränderungen der Bebauung oder geänderte Verkehrsregeln), gibt es keinen fixen Zeitpunkt zu dem sämtliche relevanten Daten erhoben werden können, um permanent valide Inputparameter für die Fahrfunktionsentwicklung zu finden. Vielmehr ist davon auszugehen, dass existierende Fahrfunktionen auf Basis neuartiger und veränderter funktionaler Anforderungen kontinuierlich nachjustiert werden müssen. Gleichermaßen muss die qualitative Weiterentwicklung bestehender Fahrfunktionen berücksichtigt werden.

Erfindungsgemäß soll daher auf Basis der Kombination neu erhobener und historischer Realdatensätze synthetische Datensätze erzeugt werden, die zur Erweiterung der Trainingsdatenbasis dienen. Dies geschieht vor dem Hintergrund der im Anschluss erforderlichen Fahrfunktionstests. Um hinreichende Realdatenmengen für die entsprechende Validierung zur Verfügung zu haben, können diese Realdaten nur in begrenztem Ausmaß für das Modelltraining verwendet werden. Für den weiteren Entwicklungsprozess werden Realdaten daher durch synthetische Datensätze angereichert (z.B. durch Überlagerung der Szenen mit Regen oder Licht und Schatten). Eine wichtige Rolle kommt hier den Syntheseverfahren zu, mit deren Hilfe diese Daten erstellt werden.

Für die Fahrsituationstest können verschiedene Testverfahren zum Einsatz kommen, wie insbesondere Step-based-Testing, Requirement-based-Testing und / oder Szenario-basiertes-Testen.

Beim Szenario-basierten Testen wird die Fahrweise des Fahrzeugs in einer möglichst realitätsnahen Verkehrssituation analysiert. Die zu analysierenden Aspekte der Verkehrssituation und deren Bewertung sind abhängig von dem zu testenden System. Dazu werden beim Szenario-basierten Testen von Systemen und Systemkomponenten zur autonomen Führung eines Kraftfahrzeugs Szenarien definiert, welche als Abstraktion einer Verkehrssituation bezeichnet werden können. Für jedes Szenario können dann wiederum Testfälle ausgeführt werden. Ein logisches Szenario ist hierbei die Abstraktion einer Verkehrssituation mit der Straße, dem Fahrverhalten und dem umliegenden Verkehr ohne konkrete Parameterwerte festzulegen. Durch die Wahl konkreter Parameterwerte wird aus dem logischen Szenario ein konkretes Szenario. Ein solches konkretes Szenario entspricht einer jeweils einzelnen Verkehrssituation.

Zur Unterscheidung der Verkehrsszenarien bzw. Szenarien im Szenario-basierten-Testen werden nicht nur statische Parameter, wie z.B. aber nicht ausschließlich Umfeld, Bebauung oder Fahrbahnbreite herangezogen, sondern insbesondere auch das Fahrverhalten der einzelnen Verkehrsteilnehmer. Die Bewegungen der Verkehrsteilnehmer und damit das Fahrverhalten werden durch Trajektorien beschrieben. Trajektorien beschreiben einen Pfad sowohl in räumlicher als auch in zeitlicher Richtung. Durch Parameter wie z.B. Geschwindigkeit, können Bewegungen von Verkehrsteilnehmer unterschieden werden.

Unabhängig vom gewählten Testverfahren haben die Fahrdaten und auch die synthetischen Daten eine große Relevanz, um mit Simulationen hinreichend gut Fahrfunktionen zu erproben und anzupassen. Dabei müssen verschiedene Fahrsituationen / Szenarien / Anwendungsfälle mit entsprechenden Sicherheitsstandards abgedeckt werden. Solche werden beispielsweise durch SOTIF (ISO/PAS 21448) angegeben.

Ein Anwendungsbeispiel stellt die Objekterkennung und damit eine Objekterkennungskomponente im Fahrzeug dar. Eine solche Komponente und / oder Fahrfunktion kann daraufhin geprüft werden, ob in diversen Szenarien Passanten korrekt erkannt werden. Ist dies der Fall, kann die aktuelle Modellkonfiguration beibehalten werden. Ergeben sich Abweichungen, wird das Modell weiter angepasst, bis die formulierte Mindestperformanz erreicht wird.

Ein weiteres Beispiel ist das sogenannte Cut-In-Szenario. In einem solchen Szenario können Fahrfunktionen und Fahrerassistenzsystem getestet werden, die einen notwenigen Sicherheitsabstand zu anderen Verkehrsteilnehmern wahren. Das Cut-In-Szenario kann als Verkehrssituation bezeichnet werden, bei welcher ein hochautomatisiertes bzw. autonomes Fahrzeug in einer vorgegebenen Fahrspur fährt und ein anderes Fahrzeug mit gegenüber dem Ego-Fahrzeug verringerter Geschwindigkeit von einer weiteren Fahrspur in die Fahrspur des Ego-Fahrzeugs in einem bestimmten Abstand einschert. Das Ego-Fahrzeug bezeichnet hier das zu testende Fahrzeug (SUT).

Die Geschwindigkeit des Ego-Fahrzeugs und des weiteren Fahrzeugs, welches auch als Fellow-Fahrzeug bezeichnet wird, ist dabei konstant. Da die Geschwindigkeit des Ego-Fahrzeugs höher ist als die des Fellows, muss das Ego-Fahrzeug abgebremst werden, um eine Kollision der beiden Fahrzeuge zu vermeiden.

Um diese aufgeführten Beispiele aussagekräftig messen zu können, ist es notwendig das Testobjekt in bekannten Simulationsumgebungen einzubinden und sogenannte XIL-Tests durchzuführen, also eine Mischung aus Model-, Software- (SIL) und Hardware-in-the-loop (HIL) Tests. Aufgrund der vergleichsweise hohen Aufwände für HIL-Tests können diese nur an ausgewählten Punkten des Prozesses eingesetzt werden. Sie sind angesichts des cyber-physischen Charakters der Fahrzeugsysteme jedoch unerlässlich, um aussagekräftige Ergebnisse für den späteren Einsatz in produktiven Fahrzeugsysteme zu erhalten. Hilfreich sind hierbei insbesondere Co-Simulation Ansätze, um in hybriden Simulationsszenarien eine gezielte und durchgängige Auslastung der stark limitierten Testhardware zu gewährleisten. Je effizienter diese Aufspaltung in Testszenarien gestaltet werden kann, desto stärker lässt sich der gesamte Produktlebenszyklus beschleunigen.

Der virtuelle Validierungsprozess gestaltet sich also als eine iterative Abfolge von Simulation, Modelltraining und Generierung von Key Performance Indicators (KPIs) zur Bewertung der Modellperformanz, verteilt auf die einzelnen Fahrfunktionskomponenten und unterschiedliche XIL-Testkategorien.

Wichtig ist hier ein kontinuierliches Verständnis für die vorhandene Grundlage an Realdaten, die über die Bereitstellung von Verhaltenszwillingen / Digital Twins für relevante Flottensysteme und sonstige involvierte Datenquellen (z.B. Infrastrukturelemente) gewährleistet werden kann. Nur so ist eine Anpassung/Einstellung und/oder Weiterentwicklung einer Fahrfunktion und ihrer Verhaltensregeln zu ermöglichen und folgerichtig zu testen, so dasss über eine virtuelle Homologation die Freigabe der Funktion erfolgt.

Der Begriff Key-Performance-Indicator (KPI) oder auch Leistungsindikator bezeichnet im erfindungsgemäßen Verfahren Werte (KPI-Werte), anhand derer der Fortschritt oder der Erfüllungsgrad hinsichtlich wichtiger Zielsetzungen oder kritischer Erfolgsfaktoren nach oder während einer Simulation von zumindest teilweise autonomen Fahrzeugen gemessen und / oder ermittelt werden kann. KPIs und / oder KPI-Werte erlauben eine Bewertung der Simulation und / oder des Simulationsschritts zur Testnachsteuerung, so dass gezielter, ressourcenschonender und zeiteffizienter getestet werden kann.

Um also einen kompletten Ende-zu-Ende Prozess abdecken zu können, der aus sämtlichen zeitlich-logisch aufeinander folgende Teilprozesse besteht, die zur Erfüllung eines konkreten Kundenbedürfnisses oder einer konkreten Anforderung notwendig sind und entsprechend automatisieren zu können, bedarf es einer Lösung für die Homologation. Hier ist insbesondere die Einführung einer virtuellen Homologation von Bedeutung, also einer Freigabe auf Basis von virtuellen und/oder teilweise virtuellen Simulationsergebnissen und deren Bewertung. Grundsätzlich lässt sich hier eine Unterscheidung in homologationsneutrale und homologationsrelevante Funktionen vornehmen.

Eine solche Homologationsrelevanz von Fahrfunktionsänderungen müssen insbesondere Fahrzeughersteller gewährleisten. Im Falle einer Feststellung und Kategorisierung als homologationsrelevante Funktionen bedarf es aktuell die Einleitung eines Nachtragsverfahrens. Klar ist, dass sich die benötigte Prozessgeschwindigkeit nur durch eine gewisse Integration von Prüfinstanzen im Rahmen des Gesamtprozesses realisieren lässt. Hierfür müssen die entsprechenden Schnittstellen zwischen Entwicklungs- und Prüfsystemen sowie den Homologationsprozessen geschaffen werden, so dass unabhängige Prüfer der technischen Dienste unmittelbaren Zugriff auf die prüfungsrelevanten Teilsysteme ausüben können.

Eine zumindest teilweise automatisierte Fahrfunktion muss gemäß verschiedenen Verordnungen wie beispielsweise einer Verordnung für Automated lane keeping system (ALKS) die Risiken für die Sicherheit der Fahrzeuginsassen in einem Fahrzeug und anderer Verkehrsteilnehmer minimieren. Dies muss mindestens auf dem Niveau gewährleistet sein, auf dem ein kompetenter und vorsichtiger, aufmerksamer menschlicher Fahrer die Risiken minimieren könnte. Eine solche Risikobilanz muss bewertet und nachgewiesen werden. Um solche Risiken folgerichtig abzuschätzen müssen insbesondere Hersteller Risikogrenzwerte festlegen.

Im Allgemeinen gibt es zwei Möglichkeiten der Risikobetrachtung: in absoluten Werten und relativ zu einem bestimmten Referenzsystem oder Verhalten. Im ersten Fall einer Risikobewertung in Form von absoluten Werten müssen die Wahrscheinlichkeiten des angenommenen Szenarios, die Wahrscheinlichkeit der auslösenden Ursache für den nachfolgenden Schaden sowie mögliche Abhängigkeiten zwischen diesen beiden Faktoren bewertet werden. Im letztgenannten Fall werden repräsentative Szenarien einschließlich ihrer Folgen für das zu prüfende System mit einem Referenzsystem in Bezug auf Schadenswahrscheinlichkeiten und Schweregrade verglichen. Bei beiden Ansätzen (absolute und relative Risikobewertung) muss berücksichtigt werden, ob es sich bei der angestrebten Risikoschwelle um eine globale Schwelle handelt oder ob es einzelne Unterschwellen für einzelne Szenarien oder Gruppen von Szenarien gibt.

Gegenwärtig wird das Unfallgeschehen auf öffentlichen Straßen durch von Menschen gesteuerte Fahrzeuge dominiert. D. h. heute kann die positive Risikobilanz allein dadurch argumentiert werden, dass nachgewiesen wird, dass das zu prüfende System einen menschlichen Fahrer in beispielsweise einem mit Advanced Emergency Braking System (AEB) ausgestatteten Fahrzeug unter Straßenbedingungen, die eine starke Verzögerung von -0,85 G erlauben, übertrifft. Primäre Aufgabe eines AEBS ist es, einen Auffahrunfall im längs gerichteten Verkehres zu verhindern bzw. die Unfallfolgen zu vermindern, indem die Geschwindigkeit autonom - ohne Zutun des Fahrers - herabgesetzt wird. Damit muss aus dem Vergleich zwischen dem Grad der Erfüllung von Anforderungen zur Homologation der Fahrfunktion mit ausschließlich menschlichem Fahrer und mit aktivierter Fahrfunktion ohne menschliche Fahrer eine Risikobilanz errechnet werden.

Eine Risikobilanz fällt dabei positive aus, wenn die Fahrfunktion eine höhere Sicherheit, Fahrkomfort und / oder Energieeffizienz erzeugt als ein menschlicher Fahrer und negativ, wenn ein menschlicher Fahrer ohne Eingreifen der Fahrfunktion eine höhere Sicherheit, Fahrkomfort und / oder Energieeffizienz erreicht.

Damit wird der Bedarf und Aufgabe der Erfindung ersichtlich, sodass durch die Nutzbarmachung von Realfahrdaten und Überführung in ein geeignetes Test- und/oder Simulationssystem und der Integration von Prüfinstanzen in den Testprozess eine nachträgliche Optimierung und erneute Freigabe, also einer virtuellen Homologation von Fahrfunktionen ermöglicht wird.

Die Erfindung sieht dazu ein computerimplementiertes Verfahren zum automatisierten Testen und Freigeben von Funktionen, insbesondere Sicherheitsfunktionen, eines Fahrzeugs und / oder virtuellen Homologation von zu testenden zumindest teilweise autonomen Fahrfunktionen vor.

Weitere Ausführungsformen der vorliegenden Erfindung sind Gegenstand der weiteren Unteransprüche und der nachfolgenden Beschreibung unter Bezugnahme auf die Figuren.

Die Testeinheit umfasst Mittel zum automatisierten Testen von Funktionen, insbesondere Sicherheitsfunktionen, eines Fahrzeugs und / oder Homologation von zu testenden zumindest teilweise autonomen Fahrfunktionen.

Gemäß einem weiteren Aspekt der Erfindung ist ferner ein Computerprogramm mit Programmcode vorgesehen, um das erfindungsgemäße Verfahren durchzuführen, wenn das Computerprogramm auf einem Computer ausgeführt wird. Gemäß einem weiteren Aspekt der Erfindung ist ein Datenträger mit Programmcode eines Computerprogramms vorgesehen, um das erfindungsgemäße Verfahren durchzuführen, wenn das Computerprogramm auf einem Computer ausgeführt wird.

Die hierin beschriebenen Merkmale des computerimplementierten Verfahrens sind zum automatisierten Testen und Freigeben von Funktionen, insbesondere Sicherheitsfunktionen, eines Fahrzeugs und / oder Homologation von zu testenden zumindest teilweise autonomen Fahrfunktionen verwendbar. Ebenfalls ist die erfindungsgemäße Testeinheit dazu geeignet, eine Testnachsteuerung von einer Vielzahl unterschiedlicher Vorrichtungen bzw. Steuergeräte von z.B. Automobilen, Nutzfahrzeugen und / oder kommerziellen Fahrzeugen, Schiffen oder Flugzeugen durchzuführen.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Figur 1: zeigt eine schematische Darstellung zur erfindungsgemäßen Unterscheidung von Fahrsituationen,
- Figur 2: zeigt eine schematische Darstellung zur erfindungsgemäßen Unterscheidung von Fahrsituationen,
- Figur 3: zeigt eine schematische Ansicht, die eine Grenze zwischen kritischen und nicht-kritischen Testergebnissen angibt,
- Figur 4: zeigt eine erfindungsgemäße Darstellung eines Key Performance Indicators (KPI)
- Figur 5: zeigt eine schematische Darstellung zur erfindungsgemäßen Beschreibung des Optimierungsprozess mittels KPI
- Figur 6: zeigt eine schematische Darstellung zur erfindungsgemäßen Beschreibung der Verwendung von Verhaltenszwillingen
- Figur 7: zeigt eine schematische Darstellung eines möglichen erfindungsgemäßen Verfahrens zur automatischen Freigabe

### Ausführliche Beschreibung der Ausführungsformen

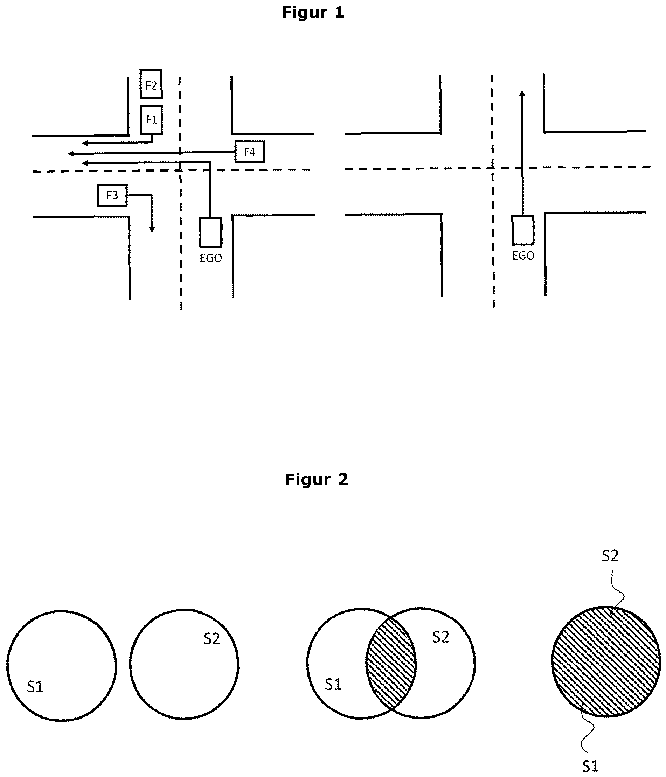

Figur 1 beschreibt zwei verschiedene Szenarien S1 und S2. Es wird jeweils ein Kreuzungsbereich dargestellt. In beiden Szenarien S1 und S2 ist ein Ego-Fahrzeug (Ego) dargestellt. In S1 führt das Ego-Fahrzeug (Ego) ein Abbiegemanöver durch. Das Egofahrzeug ist auch das "Subject under Test" (SUT). Es sind dabei vier Fellowfahrzeuge (F1 bis F4) beteiligt. In S2 folgt das Ego-Fahrzeug dem Fahrverlauf geradeaus ohne Beteiligung von Fellowfahrzeugen. Es liegen demnach Unterschiede in den Umgebungsparametern wie auch Fahrsituationsparameter vor. Ziel in den Szenarien kann z.B. die Testung und Simulation eines Abstandsregeltempomat sein.

Die Testung und Simulation eines solchen Abstandsregeltempomat erfordert gegebenenfalls eine vielfache Testnachsteuerung, um ein valides Testergebnis zu erhalten. Es können Fahrdaten aus realen Fahrten (Flottenbetrieb / regulärer Fahrbetrieb) genutzt werden, um eine geeignete Auswahl an Szenarien zu treffen und eine hinreichend gute Parametrierung zu finden, so dass aussagekräftige Test durchgeführt werden können. Über zumindest einen und / oder auch einer Menge von Testausführungen entstehen viele Testergebnisse, die automatisch durch automatisch und/oder manuell gewählte KPIs bewertet werden können. Durch die Bewertung über KPIs können Homologationsprozesse beschleunigt und überhaupt erst ermöglicht werden, so dass eine zeitnahe Freigabe zur weiteren Verwendung der veränderten Fahrfunktion im realen Fahrbetrieb realisiert wird. Ein Beispiel für die Analyse durch ein KPI wäre eine Bewertung von Zusammenhängen in Kollisionsraten, wie beispielsweise:
- Wenn mindestens 10 (N) Testfahrten absolviert sind, untersuche die Kollisionsrate in Bezug auf die simulativ gefahrenen Testkilometer.
   o Bei durchschnittlich 2 (X) Kollisionen (auch beinahe Kollisionen) auf 1.000 km wird nur eine eingeschränkte Freigabe der Fahrfunktion erlaubt.
   ∘ Bei 3 (Y) Kollisionen (auch beinahe Kollisionen) auf 1.000 km wird eine Freigabe der Fahrfunktion nur unter Auflagen ermöglicht.
   ∘ Bei 4 (Z) Kollisionen (auch beinahe Kollisionen) auf 1.000 km wird der aktuelle Testprozess abgebrochen und eine weitere Optimierung der Fahrfunktion erforderlich.
- Falls alle Testfahrten mit dem ersten Szenario simulativ ausgeführt wurden und keine (0, A) Kollision aufgetreten ist kann eine Freigabe in Erwägung gezogen werden. Damit kann mittels der Bewertung durch KPIs ein Grad der Erfüllung von Anforderungen an die zu testende Funktion und eine Freigabe der Funktion angegeben werden.

Figur 2 zeigt eine schematische Darstellung zur erfindungsgemäßen Unterscheidung von Fahrsituationen / Szenarien (S1 bis Sn). Es können gemäß der Figur 2 die Szenarien S1 und S2 vollständig abweichend sein, insbesondere bezogen Fahrzeugparameter und / oder Fahrsituationsparameter und / oder Umgebungsparameter, überlappende Fahrzeugparameter und / oder Fahrsituationsparameter und / oder Umgebungsparameter aufweisen oder auch bezogen auf die jeweiligen Parameter gleich sein. Gerade für die Aussage eine hinreichende Homologation und damit für die Freigabe einer Fahrfunktionen spielt die Auswahl geeigneter Fahrsituationen / Szenarien eine entscheidende Rolle und ebenfalls die Wahl der Parametrierung der Szenarien. Dafür ist die Extraktion von relevanten Situationen aus den Realdaten wichtig, so dass hieraus zu testende Parametrierungen entnommen werden können.

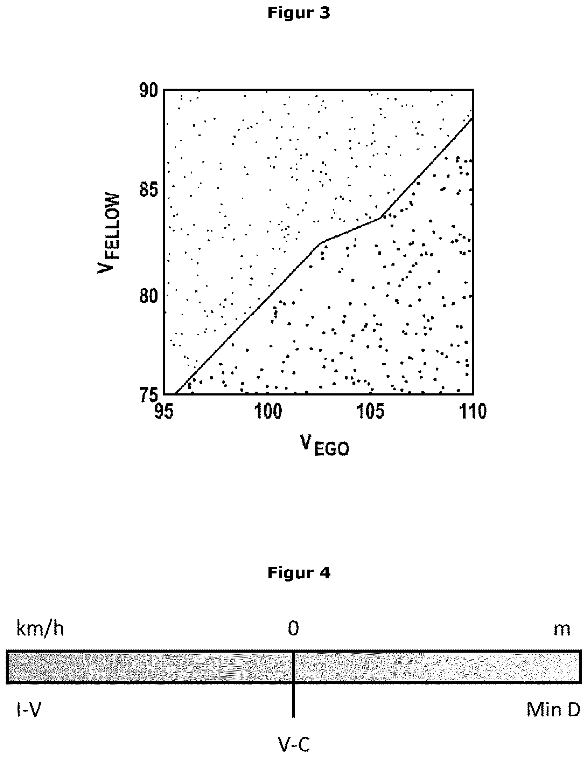

Figur 3 zeigt eine Funktion, die eine Grenze zwischen kritischen und nicht-kritischen Testergebnissen angibt. Die dargestellten Punkte sind simulierte Testergebnisse. Alternativ können es auch approximierte Testergebnisse sein.

Bei der dargestellten Funktion handelt es sich um die Sicherheits-Zielfunktion, welche einen numerischen Wert aufweist, der bei einem Sicherheitsabstand zwischen dem Egofahrzeug (Ego) und dem weiteren Kraftfahrzeug, dem Fellowfahrzeug, von ≥ VFELLOW x 0,55 einen Minimalwert aufweist, bei einer Kollision zwischen dem Egofahrzeug (Ego) und dem weiteren Kraftfahrzeug einen Maximalwert aufweist, und bei einem Sicherheitsabstand zwischen dem Kraftfahrzeug und dem weiteren Kraftfahrzeug von ≤ VFELLOW x 0,55 einen numerischen Wert aufweist, welcher größer als der Minimalwert ist. Ergebnisse über eine Sicherheits-Zielfunktion können durch KPIs über zumindest einen und / oder mehrere Testausführungen hinweg beobachtet werden. Ergebnisse der Bewertung können zur Entscheidung über die Freigabe der geänderten Fahrfunktion herangezogen werden.

Alternativ zur Sicherheits-Zielfunktion kann beispielsweise eine Komfort-Zielfunktion oder eine Effizienz-Zielfunktion simuliert und / oder approximiert werden, welche einen numerischen Wert aufweist, der im Falle keiner Änderung der Beschleunigung des Kraftfahrzeugs einen Minimalwert aufweist, bei einer Kollision zwischen dem Egofahrzeug (Ego) und dem weiteren Kraftfahrzeug einen Maximalwert aufweist, und bei einer Änderung der Beschleunigung des Egofahrzeug (Ego) in Abhängigkeit des Betrags der Änderung der Beschleunigung einen numerischen Wert zwischen dem Minimalwert und dem Maximalwert aufweist. Die Mehrzahl von Fahrsituationsparametern, insbesondere die Geschwindigkeit VEGO des Egofahrzeugs (Ego) und die Geschwindigkeit VFELLOW des weiteren Kraftfahrzeugs, des Fellowfahrzeugs, werden innerhalb des vorgegebenen Definitionsbereichs z.B. durch eine Simulation erzeugt.

In der Figur 4 wird eine erfindungsgemäße Darstellung eines Key Performance Indicators (KPI) gezeigt. Wenn für ein Szenario / Fahrsituation und darin für ein bestimmtes Subject under Test (SUT) das Auftreten einer Kollision (V-C) relevant ist, ist hierzu ein KPI (KPI) zu wählen, wie eines, dass die Sicherheit der Fahrsituation bewertet (Safty KPI). Das KPI (KPI) kann insbesondere eine Aufprallgeschwindigkeit (I-V) bei einer Kollision (V-C) bestimmen oder sollte keine Kollision (V-C) auftreten einen minimalen Abstand (Min D) des Egofahrzeugs (Ego) und eines Fellowfahrzeugs angeben. Insbesondere in einem Cut-In-Szenario in dem z.B. ein Abstandsregeltempomat getestet werden soll, sind diese Ergebnisse zur Bewertung des Szenarios relevant. Dazu kann aus den ermittelten Ergebnissen ein KPI-Wert bestimmt werden.

Sollte der KPI-Wert einen definierten Schwellwert unterschreiten kann mit Hilfe der ermittelten KPI-Bewertung eine weitere Parametrierung der Simulation gefunden werden. Wird jedoch der Schwellwert für einen KPI-Wer überschritten kann eine Freigabe der Fahrfunktion festgelegt werden.

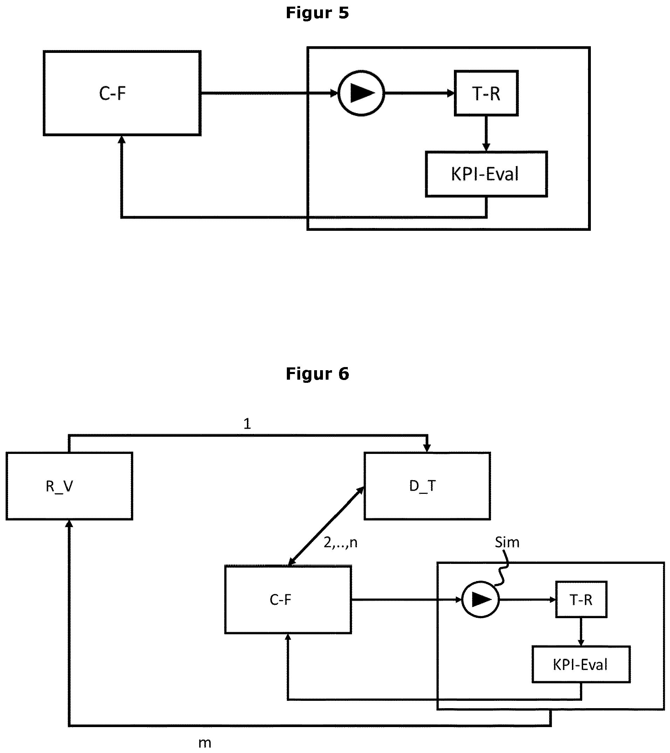

Figur 5 zeigt eine schematische Darstellung zur erfindungsgemäßen Beschreibung des Optimierungsprozess mittels KPI. Dazu wird eine Fahrfunktion geändert/optimiert (C-F). Die Fahrfunktion wird dann in einer Simulationsumgebung (Sim) simuliert. Die Ergebnisse der Simulation (T-R) werden darauffolgend durch zumindest einen KPI evaluiert (KPI-Eval) und ein KPI-Wert wird bestimmt. Entsprechend des Ergebnisses der Evaluation wird ein weiterer Optimierungsprozess gestartet oder der Testprozess als abgeschlossen angesehen. Dabei können während der Simulationsphase verschiedene Parameter verwendet werden und / oder verschiedene Fahrsituationen /Szenarien dem Test zugrunde gelegt werden.

Figur 6 beschreibt eine schematische Darstellung zur erfindungsgemäßen Beschreibung der Verwendung von Verhaltenszwillingen (D_T, Digital Twins). Ein Verhaltenszwilling (D_T) beschreibt das Fahrzeug und / oder die Fahrzeugkomponente und / oder Fahrfunktion, so dass ein adäquates Testen ermöglicht wird. Es werden Fahrzeugdaten (1) von zumindest einem realen Fahrzeug (R_V), gewonnen im realen Fahrbetrieb, wobei Fahrzeugdaten gemessene Sensorwerte des Fahrzeugs enthalten an den Verhaltenszwilling (D_T) übergeben. Die zumindest eine Fahrfunktion wird angepasst (C-F) und mit Hilfe des Verhaltenszwilling (D_T) getestet (2 bis n), wobei XIL, SIL und/oder HIL Tests verwendet werden können. Das Testen über den digitalen Verhaltenszwilling umfasst zumindest eine Iteration. Jeder Test / Simulation (Sim) produziert Testergebnisse (T-R), die anschließend weiter analysiert werden. Wenn in der Key Performance Indicator-Evaluation (KPI-Eval) einen Schwellwert des KPI zur Bewertung des Tests / der Simulation und / oder zumindest eines Simulationsschritts einen Grad der Erfüllung von Anforderungen zur Homologation der Funktion überschreitet und / oder unterschreitet kann ein Freigabeprozess gestartet werden. Damit wird die Iteration der Veränderung und / oder Optimierung der Funktion beendet werden. Nach einer Freigabe (m) wird die veränderte Fahrfunktion wieder an das reale Fahrzeug (R_V) gegeben und im realen Fahrbetreib verwendet.

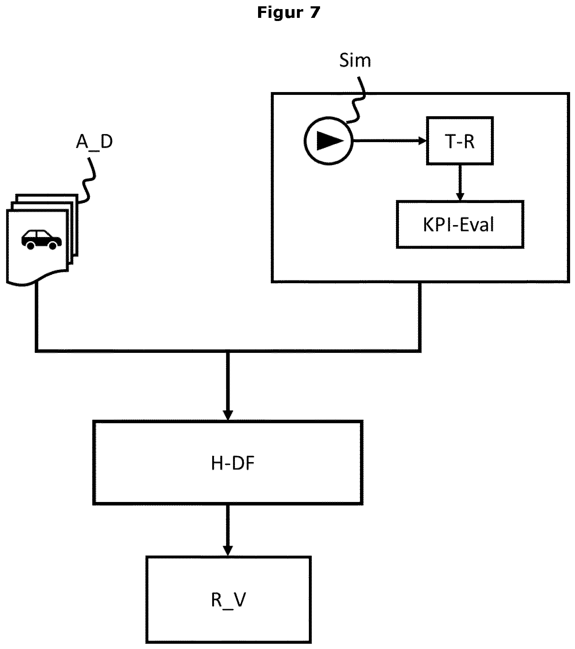

Figur 7 zeigt eine schematische Darstellung eines möglichen erfindungsgemäßen Verfahrens zur automatischen Freigabe einer Fahrfunktion. Dazu wird in einer bevorzugten Ausführungsform eine Risikobilanz berechnet. Als Grundlage für die Bestimmung einer Risikobilanz werden existierende Daten (A_D) und die Ergebnisse aus der KPI-Evaluation (KPI-Eval) verwendet. Die KPI-Evaluation (KPI-Eval) beinhaltet Ergebnisse (T-R) der Simulation (Sim) und der entsprechenden Bewertung hinsichtlich eines Schwellwert des KPIs. Dabei Können die KPIs manuell durch den Nutzer / automatisch durch das Testsystem und / oder als Vorgabe von Verordnungen zur Gefahren-/Risikobeurteilung gesetzt werden.

Im Rahmen der virtuellen Homologation (H-DF) werden genannte Datengrundlage zusammengeführt und eine Risikobilanz bestimmt. Es wird der Grad der Erfüllung von Anforderungen durch eine Risikobilanz angegeben. Die Risikobilanz fällt positiv aus, wenn die Fahrfunktion eine höhere Sicherheit, Fahrkomfort und / oder Energieeffizienz erzeugt als ein menschlicher Fahrer und negativ, wenn ein menschlicher Fahrer ohne Eingreifen der Fahrfunktion eine höhere Sicherheit, Fahrkomfort und / oder Energieeffizienz erreicht. Bei einer positiven Risikobilanz wird die zu testende Fahrfunktion an das reale Fahrzeug (R_V) zurückgegeben.

Neben der beschrieben Ausführungsform Freigabe einer Fahrfunktion sind weitere erfindungsgemäß umfasst.

## Patentansprüche

1. Computerimplementiertes Verfahren zum automatisierten Testen und Freigeben von Funktionen, insbesondere Sicherheitsfunktionen, eingebundenen in einen Ende-zu-Ende Prozess von der Datenerhebung im Fahrzeug bis zur Aktualisierung der Fahrfunktion in das Fahrzeug zurück und / oder virtuelle Homologation von zu testenden zumindest teilweise autonomen Fahrfunktionen mit den Schritten:
a) Erhalten von Fahrzeugdaten von zumindest einem realen Fahrzeug, gewonnen im realen Fahrbetrieb, wobei die Fahrzeugdaten gemessene Sensorwerte des Fahrzeugs enthalten;
b) Extrahieren von zumindest einem Parameter aus den Fahrzeugdaten;
c) Aufbauen einer Simulation parametriert mit dem zumindest einem extrahierten Parameter;
d) Durchführen zumindest eines Tests mit der aufgebauten Simulation;
e) Bewerten der Simulationsergebnisse mittels zumindest einen manuell und / oder automatisch gewählten Key Performance Indicators (KPI) und
f) Solange der KPI einen definierten Schwellwert unterschreitet und / oder überschreitet Optimieren und / oder Verändern der zu testenden Funktion und testen der Funktion anhand der Schritte d) und e);
g) Freigeben der geänderten Funktion und / oder Übermitteln der geänderten Funktion an das zumindest eine reale Fahrzeug.

2. Computerimplementiertes Verfahren nach Anspruch 1, **dadurch gekennzeichnet, dass** eine Funktion eines Fahrzeugs Funktionen zur Unterstützung eines Fahrers des Fahrzeugs in bestimmten Fahrsituationen und / oder Verkehrssituationen umfasst, wobei die Funktionen eine Steigerung der Sicherheit und / oder der Energieeffizienz und / oder des Fahrkomforts ermöglichen.

3. Computerimplementiertes Verfahren nach Anspruch 1, **dadurch gekennzeichnet, dass** ein Test und / oder eine Simulation virtuell und / oder teilweisen virtuell durchgeführt werden kann.

4. Computerimplementiertes Verfahren nach Anspruch 1, **dadurch gekennzeichnet, dass** zumindest ein Test / eine Simulation durch zumindest einen aus Fahrzeugdaten extrahierten Parameter bestimmt wird, der zur Simulationslaufzeit und / oder zum Simulationsende abgefragt wird, wobei der Parameter insbesondere eines der folgenden Parameterausprägungen umfasst:
a) Fahrzeugparameter, aufweisend zumindest eine Fahrzeugeinstellung und / oder einen Sensorwert, der eine Fahrzeugeigenschaft angibt;
b) Umgebungsparameter aufweisend zumindest eines der Merkmale: die Anzahl von und / oder die Breite eines Fahrstreifens und / oder Kurven und / oder Straßenbeschränkungen und / oder der Umgebungstemperatur;
c) Fahrsituationsparameter, der die Anzahl und Eigenschaften beweglicher Objekte beschreibt, aufweisend zumindest eines der Merkmale: die Anzahl von Verkehrsteilnehmern und / oder die Anzahl von Spurwechsel in einer Verkehrssituation und / oder die Geschwindigkeit der Verkehrsteilnehmer und / oder Verkehrsmittel, insbesondere Fahrzeuge.

5. Computerimplementiertes Verfahren nach einem der vorhergehenden Ansprüche, **dadurch gekennzeichnet, dass** durch einen KPI ein KPI-Wert bestimmt wird, durch den eine Bewertung der aktuellen Simulation und / oder zumindest eines Simulationsschritts erfolgt und zu einem KPI ein Schwellwert definiert ist.

6. Computerimplementiertes Verfahren nach einem der vorhergehenden Ansprüche, **dadurch gekennzeichnet, dass** der definierte Schwellwert des KPI zur Bewertung der Simulation und / oder zumindest eines Simulationsschritts einen Grad der Erfüllung von Anforderungen zur virtuellen Homologation / Freigabe der Funktion angibt.

7. Computerimplementiertes Verfahren nach einem der vorhergehenden Ansprüche, **dadurch gekennzeichnet, dass** der Grad der Erfüllung von Anforderungen zur virtuellen Homologation / Freigabe der Funktion durch eine Risikobilanz angegeben wird, die positive ausfällt wenn die Fahrfunktion eine höhere Sicherheit, Fahrkomfort und / oder Energieeffizienz erzeugt als ein menschlicher Fahrer und negativ wenn ein menschlicher Fahrer ohne Eingreifen der Fahrfunktion eine höhere Sicherheit, Fahrkomfort und / oder Energieeffizienz erreicht.

8. Computerimplementiertes Verfahren nach einem der vorhergehenden Ansprüche, **dadurch gekennzeichnet, dass** zum Aufbauen einer virtuellen und / oder teilweisen virtuellen Simulation ein digitaler Verhaltenszwilling des realen Fahrzeugs und/oder Fahrfunktion erzeugt wird mit einer Simulationsumgebung entsprechend der Fahrsituationen und / oder Verkehrssituationen basierend auf den extrahierten Parametern, so dass zeiteffizient ein realitätsnahes Testen und Optimieren der Funktion erfolgt.

9. Computerimplementiertes Verfahren nach einem der vorhergehenden Ansprüche, **dadurch gekennzeichnet, dass** der digitaler Verhaltenszwilling entsprechend der Testaufgabe, also der zu testenden Fahrfunktion bestehend aus zumindest einer Software- und/oder Elektronikfunktion und der nötigen freigaberelevanten Tests, die sich aus Zulassungskriterien für die zu testende Fahrfunktion bestehend aus zumindest einer Software- und/oder Elektronikfunktion automatisiert erstellt und parametriert wird.

10. Computerimplementiertes Verfahren nach einem der vorhergehenden Ansprüche, **dadurch gekennzeichnet, dass** während der Optimierung iterativ zumindest eine Einstellung der Funktion und / oder zumindest eine Verhaltensregel der Funktion angepasst wird.

11. Testeinheit zum automatisierten Testen und Freigeben von Funktionen, insbesondere Sicherheitsfunktionen, eingebundenen in einen Ende-zu-Ende Prozess von der Datenerhebung im Fahrzeug bis zur Aktualisierung der Fahrfunktion in das Fahrzeug zurück und / oder virtuelle Homologation von zu testenden zumindest teilweise autonomen Fahrfunktionen mit den Schritten:
a) Erhalten von Fahrzeugdaten von zumindest einem realen Fahrzeug, gewonnen im realen Fahrbetrieb, wobei die Fahrzeugdaten gemessene Sensorwerte des Fahrzeugs enthalten;
b) Extrahieren von zumindest einem Parameter aus den Fahrzeugdaten;
c) Aufbauen einer Simulation parametriert mit dem zumindest einem extrahierten Parameter;
d) Durchführen zumindest eines Tests mit der aufgebauten Simulation;
e) Bewerten der Simulationsergebnisse mittels zumindest einen manuell und / oder automatisch gewählten Key Performance Indicators (KPI) und
f) Solange der KPI einen definierten Schwellwert unterschreitet und / oder überschreitet Optimieren und / oder Verändern der zu testenden Funktion und testen der Funktion anhand der Schritte d) und e);
g) Freigeben der geänderten Funktion und / oder Übermitteln der geänderten Funktion an das zumindest eine reale Fahrzeug.

12. Testeinheit nach Anspruch 11, **dadurch gekennzeichnet, dass** die Testeinheit durch ein Steuergerät ausgebildet ist, für welches zumindest eine Funktion eines Fahrzeugs durch virtuelle und / oder reale Tests geprüft wird.

13. Computerprogramm mit Programmcode, um das Verfahren nach einem der Ansprüche 1 bis 10 durchzuführen, wenn das Computerprogramm auf einem Computer ausgeführt wird.
